# EUROPEAN PATENT APPLICATION

(11) **EP 4 496 189 A1**
(43) Date of publication of application: **22.01.2025**
(21) Application number: 23306236.3
(22) Date of filing: 18.07.2023
(51) Int. Cl.: H02K 1/32, H02K 5/20, H02K 9/06, H02K 15/00

(54) **ELECTRIC TRACTION MOTOR FOR A VEHICLE**

(71) Applicant: ALSTOM Holdings, 93400 Saint-Ouen-sur-Seine (FR)
(72) Inventor: KNOCKAERT, Paul, 59850 NIEPPE (FR); RAGUIN, Bruno, 25720 BEURE (FR); WOLF, Maxime, 25260 MONTENOIS (FR)
(74) Representative: Lavoix

(57) **Abstract**

The invention relates to an electric traction motor (10), comprising : a motor shaft (12) ; a rotor (14) fixed to said motor shaft, the rotor including a ventilation channel (24) ; a stator (16) coupled to the rotor, the stator defining a cylindrical inner space (28) enclosing the rotor ; a motor frame (18) fixed to the stator and enclosing the rotor and stator, the motor shaft being able to rotate relative to the motor frame ; and air vents (50, 52) opening on the motor frame and allowing passage for an air flux through the at least one ventilation channel of the rotor.

The electric traction motor also comprises a first aperture (56) formed in the motor frame, the first aperture being included in the cylindrical inner space defined by the stator.

## Description

The present invention relates to an electric traction motor, comprising : a motor shaft extending along a main axis ; a rotor extending around the motor shaft and fixed to said motor shaft, the rotor including at least one ventilation channel extending substantially parallel to the main axis ; a stator coupled to the rotor, the stator defining a cylindrical inner space, extending along the main axis and enclosing the rotor ; a motor frame fixed to the stator and enclosing the rotor and stator, the motor shaft being able to rotate relative to the motor frame around the main axis ; and air vents opening on the motor frame and allowing passage for an air flux through the at least one ventilation channel of the rotor.

Typically, open motors used in the railway industry are cooled by an air flow generated through the ventilation channels of the rotor. Such a motor is for example disclosed in document WO2008/022108.

Said air flow may bring pollution, such as dirt and/or dust, pollution which can accumulate in the ventilation channels, lowering the cooling efficiency.

Due to the configuration of the motor and to the place available, the inspection and/or cleaning of the ventilation channels may need a dismounting of the motor from the vehicle bogie or car bodyshell, and/or even a disassembling of the motor itself.

The present invention aims to provide a motor allowing the inspection and cleaning of the ventilation channels with limited mounting/dismounting operations.

For this purpose, the invention relates to a motor of the aforementioned type, also comprising a first aperture formed in the motor frame, the first aperture being included in the cylindrical inner space defined by the stator.

According to preferred embodiments, the motor may include one or more of the following features, considered alone or in any technically possible combination:
- the electric traction motor also comprises a first cover reversibly coupled to the first aperture, between an open configuration and a closed configuration of said first aperture ;
- the first aperture comprises a concave surface and the first cover is a plug comprising a convex surface, so that, in the closed configuration, the plug is inserted in the first aperture and the concave and convex surfaces are in contact with each other;
- the electric traction motor also comprises a second aperture formed in the motor frame ;
- the electric traction motor also comprises a second cover reversibly coupled to the second aperture, between an open configuration and a closed configuration of said second aperture ;
- the second cover is a hatch, articulated to the motor frame ;
- the electric traction motor also comprises a fan fixed to the motor shaft and enclosed in the motor frame, said fan being able to generate the air flux through the at least one ventilation channel of the rotor.

The invention also relates to a vehicle comprising a body and an electric traction motor as described above, assembled to said body.

According to a preferred embodiment, the main axis of the motor shaft is disposed horizontally and wherein the second aperture is disposed at a bottom end of the motor frame.

The invention will be easier to understand in view of the following description, provided solely as an example, and with reference to the appended drawing, wherein :

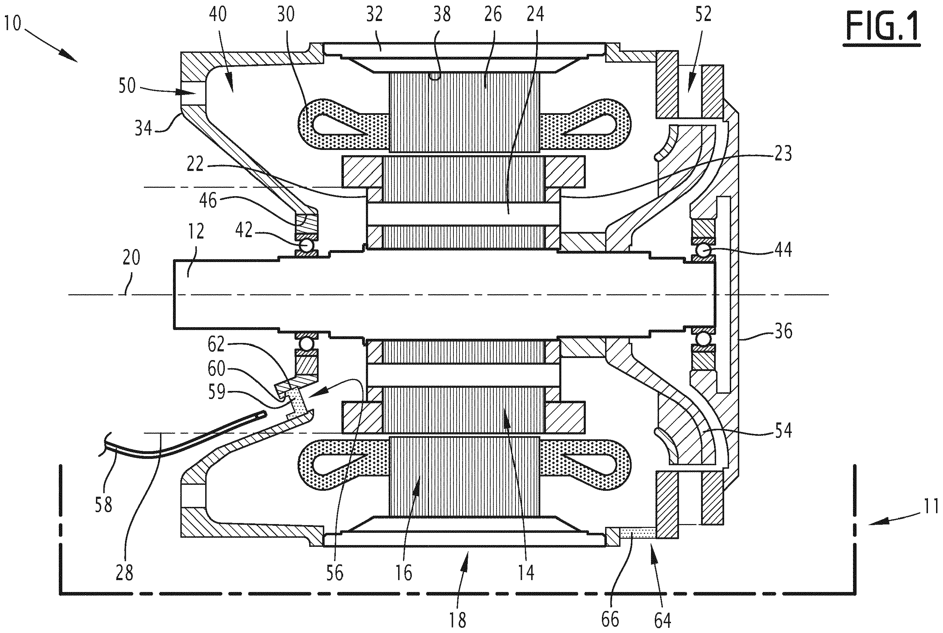

- Figure 1 is a schematic, cross-sectional view of a vehicle comprising an electric traction motor according to an embodiment of the invention.

Figure 1 shows an electric traction motor 10 according to an embodiment of the invention. In a preferred embodiment, the motor 10 is an asynchronous motor. In another embodiment, the motor is a synchronous motor.

Preferably, the motor 10 is a traction motor of a railway vehicle. More preferably, the motor 10 is assembled to a body 11 of the railway vehicle, in particular to a bogie.

As shown on Figure 1, the motor 10 comprises : a motor shaft 12 ; a rotor 14, a stator 16 and a motor frame 18.

The motor shaft 12 extends along a main axis 20. In the embodiment of Figure 1, the main axis 20 extends horizontally.

The rotor 14 extends around the motor shaft 12 and is fixed to said motor shaft 12. The rotor 14 extends axially between a first 22 and a second 23 ends. The rotor 14 includes at least one ventilation channel 24, extending parallel to the main axis 20 and opening on each of the ends 22, 23 of said rotor 14.

Preferably, the rotor 14 includes a plurality of ventilation channels 24, arranged around the main axis 20. More preferably, a number of ventilation channels 24 is comprised between two and fifty.

In an embodiment, the rotor 14 comprises metal laminations inserted around the motor shaft 12 and piled along the main axis 20. The laminations have notches and are crossed from end to end by copper bars which are all brazed on each side to a short circuit ring, so as to form a squirrel cage rotor.

The stator 16 comprises a stator core 26 of tubular shape, coaxial with the main axis 20. The stator core 26 defines a cylindrical inner space 28, extending along the main axis 20 and enclosing the rotor 14.

In the embodiment of Figure 1, the stator 16 also comprises winding coils 30 inserted in the stator core 26. The winding coils 30 extend outside of the cylindrical inner space 28.

In the embodiment of Figure 1, the motor frame 18 comprises a main part 32 and a first 34 and a second 36 flanges. The main part 32 comprises a substantially cylindrical inner surface 38, extending along the main axis 20 and fixed to the stator 16.

The first 34 and second 36 flanges are fixed respectively to a first end and to a second end of the main part 32. The motor frame 18, more precisely the main part 32 and the first 34 and second 36 flanges, define an inner compartment 40 enclosing the rotor 14 and the stator 16. The first 34 and second 36 flanges face respectively the first 22 and second 23 ends of the rotor 14.

The motor shaft 12 is able to rotate relative to the motor frame 18 around the main axis 20. In the embodiment of Figure 1, the motor 10 comprises bearing assemblies 42, 44 allowing the rotation of the motor shaft 12 relative to the first 34 and second 36 flanges. The first flange 34 comprises an axial opening 46 from which an end of the motor shaft 12 protrudes axially. Preferably, said end of the motor shaft 12 is connected to a reduction gear (not shown).

The motor 10 also comprises air vents 50, 52 formed in the motor frame 18, opening on the inner compartment 40 and allowing passage for an air flux through the at least one ventilation channel 24 of the rotor 14. In the embodiment of Figure 1, both the first 34 and second 36 flanges comprise air vents 50, 52. Preferably, said air vents 50, 52 are of small dimensions or are protected by a grid.

Preferably, the motor 10 also comprises a fan 54 fixed to the motor shaft 12 and enclosed in the motor frame 18, said fan 54 being able to generate the air flux through the at least one ventilation channel 24 of the rotor. In the embodiment of Figure 1, the fan 54 is received in the inner compartment 40, between the rotor 14 and the second flange 36.

The motor 10 also comprises a first aperture 56 formed in the motor frame 18. The first aperture 56 is included in the cylindrical inner space 28, defined by the stator 16 around the main axis 20. In other terms, the first aperture 56 is substantially aligned with the rotor 14 parallel to the main axis 20.

Preferably, the first aperture 56 is arranged in one of the first 34 and second 36 flanges. More preferably, the first aperture 56 is situated opposite the fan 54, relative to the rotor 14. In the embodiment of Figure 1, the first aperture 56 is arranged in the first flange 34.

As detailed below, the dimensions of the first aperture 56 are preferably selected for allowing the introduction of an endoscopic device 58, or a cleaning device, in the inner compartment 40.

Preferably, the motor 10 also comprises a first cover 59, reversibly coupled to the first aperture 56. In a closed configuration, shown on Figure 1, the first cover 59 is assembled to the motor frame 18 so as to close the first aperture 56. In an open configuration (not shown), the first cover 59 is dissociated from the motor frame 18 and the first aperture 56 is open.

In the embodiment of Figure 1, the first aperture 56 comprises a concave surface 60 formed in the first flange 34. Preferably, the concave surface 60 is substantially cylindrical. The first cover 59 is a plug comprising a convex surface 62 complementary with the concave surface 60. In the closed configuration, the plug 59 is inserted in the first aperture 56 and the concave 60 and convex 62 surfaces are in contact with each other.

In other embodiments, the first cover is a hatch, articulated to the first 34 or second 36 flange ; or the first cover comprises a fastener for being reversibly assembled to the first aperture.

Preferably, the motor 10 also comprises a second aperture 64 formed in the motor frame 18. More preferably, the second aperture 64 is situated at a bottom end of the inner compartment 40.

Preferably, the second aperture 64 is situated opposite the first aperture 56, relative to the rotor 14. In the embodiment of Figure 1, the second aperture 64 is arranged in the second flange 36. In another embodiment, the second aperture can also be arranged in the main part 32.

As detailed below, the dimensions of the second aperture 64 are preferably selected for allowing access to the inner compartment 40 so as to remove dirt and dust.

Preferably, the motor 10 also comprises a second cover 66, reversibly coupled to the second aperture 64, between an open configuration and a closed configuration of said second aperture 64. In the embodiment of Figure 1, the second cover 66 is a hatch, articulated to the second flange 36.

In other embodiments, the second aperture 64 and cover 66 have a similar shape of concave surface and plug, as described above for the first aperture and cover ; or the second cover comprises a fastener for being reversibly assembled to the first aperture.

A method for implementing the motor 10 will now be described. During a rotation of the rotor 14 and of the motor shaft 12, an air flow is generated in the ventilation channels 24 by the rotation of the fan 54. The air flow ensures a cooling of the rotor 14 during operation of the motor 10.

Preferably, during the working of the motor 10, the first 56 and second 64 apertures are in the closed configuration and the air flow passes through the air vents 50, 52.

When the motor 10 is not working, in order to clean the ventilation channels 24 of the rotor 14, the first cover 59 is removed from the first aperture 56. The endoscopic device 58 is introduced in the inner compartment 40 through said first aperture. The endoscopic device 58 comprises a camera allowing an operator to visualize the inside of the inner compartment.

The rotor 14 is manually rotated so as to substantially align one of the ventilation channels 24 with the first aperture 56. Therefore, it is possible to introduce the endoscopic device 58 in said ventilation channel 24 for inspection. The operation may be repeated for each ventilation channel 24 of the rotor.

Then, if the endoscopic device 58 allows to determine that the ventilation channels 24 are coated with dirt or dust, said ventilation channels 24 are cleaned, for example by introducing an air nozzle (not shown) in the first aperture 56 and then in said ventilation channel 24, and by blowing air. The dirt or dust is ejected from the ventilation channel 24 at the second end 23 of the rotor 14. Said dirt or dust falls on the bottom end of the inner compartment 40, near the second aperture 64.

After the cleaning of one or more ventilation channels 24 of the rotor, the second cover 66 is removed. The dirt or dust, fallen on the bottom end of the inner compartment 40, is then evacuated, for example by introducing an air sucker (not shown) in the inner compartment 40 through the second aperture 64.

The motor 10 according to the invention allows the inspection and cleaning of the ventilation channels 24 of the rotor, without dismounting the flanges 34, 36 from the main part 32 of the motor frame 18, and without dissociating the motor 10 from the bogie 11 of the vehicle. The maintenance of the motor 10 is therefore greatly simplified in comparison with the prior art.

## Claims

1. An electric traction motor (10) comprising :
- a motor shaft (12) extending along a main axis (20) ;
- a rotor (14) extending around the motor shaft (12) and fixed to said motor shaft (12), the rotor (14) including at least one ventilation channel (24) extending substantially parallel to the main axis ;
- a stator (16) coupled to the rotor (14), the stator (16) defining a cylindrical inner space (28), extending along the main axis (20) and enclosing the rotor (14) ;
- a motor frame (18) fixed to the stator (16) and enclosing the rotor (14) and the stator (16), the motor shaft (12) being able to rotate relative to the motor frame (18) around the main axis (20); and
- air vents (50, 52) opening on the motor frame (18) and allowing passage for an air flux through the at least one ventilation channel (24) of the rotor (14) ;
the electric traction motor (10) being **characterized in that** it also comprises a first aperture (56) formed in the motor frame (18), the first aperture (56) being included in the cylindrical inner space (28) defined by the stator (16).

2. An electric traction motor (10) according to claim 1, also comprising a first cover (59) reversibly coupled to the first aperture (56), between an open configuration and a closed configuration of said first aperture (56).

3. An electric traction motor (10) according to claim 2, wherein the first aperture (56) comprises a concave surface (60) and the first cover (59) is a plug comprising a convex surface (62), so that, in the closed configuration, the plug is inserted in the first aperture (56) and the concave (60) and convex (62) surfaces are in contact with each other.

4. An electric traction motor (10) according to any one of the previous claims, also comprising a second aperture (64) formed in the motor frame (18).

5. An electric traction motor (10) according to claim 4, also comprising a second cover (66) reversibly coupled to the second aperture (64), between an open configuration and a closed configuration of said second aperture (64).

6. An electric traction motor (10) according to claim 5, wherein the second cover (66) is a hatch, articulated to the motor frame (18).

7. An electric traction motor (10) according to any one of the previous claims, also comprising a fan (54) fixed to the motor shaft (12) and enclosed in the motor frame (18), said fan (54) being able to generate the air flux through the at least one ventilation channel (24) of the rotor (14).

8. A vehicle comprising a body (11) and an electric traction motor (10) according to one of the previous claims, assembled to said body (11).

9. A vehicle according to claim 8 taken in combination with one of claims 4 to 6, wherein the main axis (20) of the motor shaft (12) is disposed horizontally and wherein the second aperture (64) is disposed at a bottom end of the motor frame (18).
